**Europäisches Patentamt**

**European Patent Office**

**Office européen des brevets**

(19)

(11) Veröffentlichungsnummer: **0 160 196**
**B1**

# (12) EUROPÄISCHE PATENTSCHRIFT

(45) Veröffentlichungstag der Patentschrift:
**11.05.88**

(51) Int. Cl.⁴: **F 16 B 7/04**

(21) Anmeldenummer: **85103061.9**

(22) Anmeldetag: **16.03.85**

(54) **Verbindungsschloss.**

(30) Priorität: **19.03.84 DE 3409983**

(43) Veröffentlichungstag der Anmeldung:
**06.11.85 Patentblatt 85/45**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**EP - A - 0 000 525**
**EP - A - 0 059 463**
**DE - A - 1 775 802**
**DE - A - 2 556 235**
**FR - A - 2 152 941**

(73) Patentinhaber: **Exibelco GmbH,**
**Dufourstrasse 11 Postfach 336, CH-4010 Basel (CH)**

(72) Erfinder: **Michael, Roy c/o KEIL & SCHAAFHAUSEN,**
**Ammelburgstrasse 34, D-6000 Frankfurt am Main 1 (DE)**

(74) Vertreter: **Schaafhausen, Ludwig Richard, Dipl.-Phys. et al, KEIL & SCHAAFHAUSEN Patentanwälte**
**Ammelburgstrasse 34, D-6000 Frankfurt am Main 1 (DE)**

**Beschreibung**

Die Erfindung betrifft ein Verbindungsschloss zum lösbaren Verbinden zweier Gestellbauteile, insbesondere eines Stützenprofils und eines Zargenprofils, wobei das Verbindungsschloss in dem als Hohlprofil ausgebildeten Zargenprofil ortsfest angeordnet ist und in einem Gehäuse mindestens ein Feststellelement aufweist, mit dem das Verbindungsschloss und damit auch das Zargenprofil lösbar mit dem Stützenprofil verbindbar ist, und wobei in dem Gehäuse des Verbindungsschlosses ein Exzenter drehgelagert angeordnet ist, mittels dem das Feststellelement längsbeweglich in dem Gehäuse geführt ist, wodurch ein aus der Stirnseite des Gehäuses herausragendes Bauteil des Feststellelementes in eine hinterschnittene Nut des Stützenprofils einführbar und dort festklemmbar ist, und wobei der Exzenterkopf des in das Gehäuse eindrückbaren Exzenters in eine Bohrung des Zargenprofils einrastbar ist.

Derartige Verbindungsschlösser sind in vielfältigen Ausgestaltungen bekannt und werden insbesondere zur Verbindung von Stützenprofilen und Zargenprofilen verwendet, mit denen u.a. Messestände errichtet werden. Diese Verbindung soll einerseits äusserst fest, andererseits aber auch leicht herstellbar und wieder lösbar sein.

Ein gattungsgemässes Verbindungsschloss ist aus der DE-A-3 128 595 bekannt. Dieses Verbindungsschloss besteht aus einem Lagergehäuse mit einer ansteigenden Keilfläche und einem darin längsverschieblich aufgenommen als Stahlblechstreifen ausgebildeten Feststellelement, das eine Gegenschräge aufweist, die durch Federkraft an die Keilfläche angedrückt wird. Über einen Exzenter lässt sich das als Stahlblechstreifen ausgebildete Feststellelement längsbewegen, wodurch ein endseitiger Kupplungshaken am Feststellelement sowohl längsbeweglich als auch durch Auflaufen der Gegenschräge auf der Keilfläche querbeweglich ist. Aus dem Stahlblechstreifen ist eine Federzunge ausgeschnitten und abgebogen, deren Ende sich an einer Innenwand des Lagergehäuses abstützt und dort längsverschieblich geführt ist. Die Keilfläche verläuft zwischen zwei Kupplungsnasen und wird von einer Abkröpfung des Haltegliedes hintergriffen, die den Exzenterbolzen in einem hinteren Wandausschnitt des Lagergehäuses festhält.

Ein derartiges Verbindungsschloss ist nicht nur schwierig zusammenzusetzen, sondern es weist auch erhebliche Mängel bei seiner Verwendung auf, da bei einem starken Anziehen des Feststellelementes mittels des Exzenters das Halteelement ausser Eingriff mit der Keilfläche gelangen und sich die Verbindung damit wieder lösen kann. Ausserdem kann bei einer starken Beanspruchung das Verbindungsschloss wegen des einseitigen Angriffs des Kupplungshakens an der hinterschnittenen Nut des Stützenprofils das Verbindungsschloss verkanten, was zu Schwierigkeiten beim Zusammenbau beispielsweise eines Messestandes führt und bei entsprechender Belastung die Gefahr eines unbeabsichtigten Lösens der Verbindung in sich birgt.

Aufgabe der Erfindung ist es daher, ein Verbindungsschloss der eingangs genannten Art zu schaffen mit dem eine stark belastbare, lösbare Verbindung zweier Gestellbauteile hergestellt werden kann, wobei das Verbindungsschloss die Abmessungen der an sich bekannten Verbindungsschlösser aufweist und leicht zusammensetzbar sein soll.

Diese Aufgabe wird erfindungsgemäss dadurch gelöst, dass das aus dem Gehäuse herausragende Bauteil des Feststellelementes gekoppelt an seine Längsbewegung um seine Längsachse in einem begrenzten Winkelbereich verdrehbar ist, dass das Feststellelement über ein Zugelement beweglich mit dem Exzenter verbunden ist und dass das freie Ende des herausragenden Bauteils in einem Querriegel endet. Bei einem derartigen Verbindungsschloss erfolgt die Verbindung der beiden Gestellbauteile ausschliesslich durch eine Längs- und Drehbewegung des Feststellelements, das nicht mehr zwangsweise aus dieser Längsbewegungsrichtung gebracht zu werden braucht, was bei den bekannten Verbindungsschlössern entweder durch die beschriebenen Keilflächen oder durch zusätzliche Federelemente erfolgt. Damit ist ein Verkanten od. dgl. ausgeschlossen, so dass ein sicheres Anlagene des Feststellelementes an der hinterschnittenen Nut des anderen Gestellbauteiles gewährleistet ist.

In Weiterbildung dieses Erfindungsgedankens ist das gehäuseseitige Ende des herausragenden Bauteils des Feststellelementes fest mit einem um seine Längsachse kontrolliert verdrehbaren Führungsstab verbunden, der an seinem anderen Ende mit dem Zugelement verbunden ist. Damit lässt sich ein besonders schweres Verbindungsschloss herstellen.

Bei einer besonders leichten Ausführungsform der Erfindung weist das Feststellelement in seinem mittleren Bereich eine Verdrillung auf, mit der es durch eine schlitzförmige Öffnung in der Stirnseite des Gehäuses reicht. Wird dieses Feststellelement durch den Exzenter in seiner Längsrichtung bewegt, so führt es zwangsläufigerweise eine Drehbewegung um seine Längsachse aus. Damit kommt der Querriegel des Feststellelementes mit einem die hinterschnittene Nut des Stützprofils bildenden Steg in Eingriff.

Besonders einfach lässt sich das erfindungsgemässe Verbindungsschloss zusammenbauen, wenn sein Gehäuse zweiteilig ausgebildet ist, nämlich aus einem Bodenteil und einem Deckel besteht.

Das Verbindungsschloss wird sehr leicht an Gewicht und einfach in seiner Herstellung, wenn das Gehäuse aus Kunststoff besteht, was insbesondere bei einer Massenfertigung äusserst vorteilhaft ist. Im Falle eines zweiteiligen Gehäuses stellt es schon einen erheblichen Vorteil dar, wenn zumindest das Bodenteil aus Kunststoff besteht.

Insbesondere bei der leichten Ausführungsform des erfindungsgemässen Verbindungsschlosses überdeckt der Deckel des zweiteiligen Gehäuses die Gehäusestirnseite und weist den Führungsschlitz für das Feststellelement auf. Damit kann das Verbindungsschloss aus nur sehr wenigen Einzelbauteilen hergestellt werden.

Die Verbindung dieses Feststellelementes mit dem Zugelement erfolgt vorzugsweise derart, dass das Feststellelement an seinem dem Querriegel abgewandten Ende mit einer Nut versehen oder abgewinkelt ausgebildet ist, um mit einer Aufnahme in dem Zugelement in Eingriff gebracht zu werden. Durch die bewegliche Verbindung wird ein Verkanten des Feststellelementes in dem Gehäuse verhindert. Ausserdem wird die Montage des Feststellelements erleichtert.

In Weiterbildung des Erfindungsgedankens können zwei oder mehr Feststellelemente in dem Verbindungsschloss vorgesehen und über ein einziges Zugelement mit dem Exzenter verbunden sein. Damit lässt sich eine noch stärkere Zugkraft bzw. ein noch stärkeres Haltevermögen des Verbindungsschlosses erreichen.

Gemäss einer bevorzugten Ausgestaltung der Erfindung ist die Führung des Führungsstabes an dessen Umfangsfläche vorgesehen. Da sich eine derartige Führung leicht am Gehäuse direkt anbringen lässt, wird hierfür kein zusätzliches Bauteil benötigt, was die Herstellung des Verbindungsschlosses erleichtert und auch die Belastbarkeit entsprechend vergrössert.

Es hat sich als besonders zweckmässig erwiesen, zur Führung des Führungsstabes eine Drillstange vorzusehen. Mit dieser lässt sich in technisch einfacher Weise eine kontrollierte Bewegung realisieren, ohne dass aufwendige Steuermechanismen benötigt werden. Besonders einfach wird die Führung des Führungsstabes, wenn die Drillstange ein verdrehtes Vierkant-Blech ist. Es kann aber auch ein Vierkant-Stahl, ein Rundstahl mit eingefrästen Führungsnuten oder eine sonstige Drillstange verwendet werden.

Um eine nicht verdrehbare Führung der Drillstange zu schaffen, ist bei der leichten Ausführung des Erfindungsgegenstandes vorgesehen, dass die Drillstangenführung ortsfest am Gehäuse angeordnet ist. Bei der schweren erfindungsgemässen Ausführungsform ist die Drillstangenführung ein Blechgebilde, das an der Umfangsfläche der Drillstangenführung mindestens zwei Führungen aufweist. Es hat sich als äusserst zweckmässig erwiesen, die Drillstangenführung hierbei als Führungsplättchen auszubilden, das in einen Führungskörper eingesetzt ist, der in dem Gehäuse vorgesehen ist und von einem oder mehreren der Festsstellelemente durchsetzt wird. Damit lässt sich das Verbindungsschloss weitgehend ausserhalb des Gehäuses vormontieren.

Um die Drillstange ohne grossen Reibungswiderstand in ihre Lage zu bringen, hat es sich gezeigt, dass das aus einem Blech bestehende Führungsplättchen eine Dicke von weniger als 2 mm aufweisen sollte. Eine Führungsplättchendicke von 0,5 mm hat sich als besonders vorteilhaft erwiesen.

Um den Führungskörper sicher in dem Gehäuse zu halten und dennoch leicht auswechseln zu können, sind gemäss einer weiteren Ausgestaltung der Erfindung an den Seitenwänden des Führungskörpers Arretiermittel, insbesondere Klipse, vorgesehen, die in entsprechende Nuten im Gehäuse eingreifen.

Um den Verschiebeweg des Führungsstabes zu begrenzen, ist gemäss einer weiteren Ausgestaltung der Erfindung vorgesehen, dass in bzw. am Gehäuse mindestens ein Anschlag zur Begrenzung der Drehbewegung des Führungsstabes vorgesehen ist. Zweckmässigerweise kann als Anschlag eine Anschlagbuchse in dem Gehäuse angeordnet sein, die mit einem Gegenanschlag am Führungsstab zur Anlage kommt. Die Anschlagbuchse lässt sich besonders einfach montieren, wenn sie nur stirnseitig in das Gehäuse eingeschoben zu werden braucht. Als Gegenanschlag für die Anschlagbuchse kann in besonders einfacher Weise eine Verquetschung des Führungsstabes dienen.

Der Anschlag zur Begrenzung der Drehbewegung des Führungsstabes kann erfindungsgemäss auch im Bereich der Aufnahme zum Einghängen des Feststellelementes an dem Zugelement vorgesehen sein und mit einem Gegenanschlag am Führungsstab zur Anlage kommen. Hierbei kann der am Gehäuse vorgesehene Anschlag einstückig mit dem Gehäuse ausgebildet sein. Damit würde kein zusätzlicher Anschlag benötigt werden.

Eine besonders sichere Verbindung wird vorzugsweise dadurch erreicht, dass der oder die Querriegel doppelköpfig als Hammerkopf ausgebildet sind. Verbindungsschlösser mit einem ein Teil eines anderen Gestellbauteiles hintergreifenden Hammerkopf sind z.B. aus der DE-A-2 603 228 bekannt. Bei diesen Verbindungsschlössern ist ein in einem Einsatzstück angeordneter, federbelasteter Bolzen vorgesehen, der quer zu seiner Längsachse eine konische Bohrung besitzt besitzt, mit welcher eine versetzt zur Achse dieser Bohrung angeordnete, eine konische Spitze aufweisende Schraube zusammenwirkt, und wobei ferner der Bolzen den, einen Schlitz des einen Teiles hintergreifenden Hammerkopf trägt.

Die Herstellung und die Belastbarkeit des erfindungsgemässen Verbindungsschlosses wird dadurch wesentlich erleichtert bzw. vergrössert, dass gemäss einer weiteren Ausgestaltung das Herausragende Bauteil, der verdrehbare Führungsstab und die Drillstange einstückig ausgebildet sind.

Zum Schutz des oder der herausragenden Bauteile sind zweckmässigerweise an der Stirnseite des Gehäuses zwei Stege oder ein stegförmiger Bügel ausgebildet.

Vorteilhafterweise durchsetzt der Exzenter das Zugelement an dessen dem Feststellelement abgekehrten Ende. Der Exzenterkopf wird dabei zweckmässigerweise durch eine Druckfeder in seiner in der Bohrung des Zargenprofils eingerasteten Stellung gehalten.

Um eine kontrollierte Verbindung zu schaffen, ist in weiterer Fortbildung des Erfindungsgedankens vorgesehen, dass der oder die Querriegel der schweren Ausführungsform des Erfindungsgegenstandes bei einer halben Hublänge um 90° quer zur hinterschnittenen Nut im Stützenprofil gedreht werden und an den Innenflächen der Hinterschneidungen zur Anlage kommen. Bei der leichten Ausführungsform des Erfindungsgegenstandes wird der Querriegel bei einer halben Hublänge um etwa 30° quer zur hinterschnittenen Nut im Stützenprofil gedreht und kommt dabei an den Innenflächen der Hinterschneidungen zur Anlage.

Um bei der Verbindung einen Formschluss zu erreichen, sind gemäss einer noch weiteren Ausgestaltung der Erfindung an den dem Gehäuse zugewandten Flächen der Querriegel der schweren Ausführungsform des Erfindungsgegenstandes Rändelungen oder Kordelungen ausgebildet. Bei der leichten Ausgestaltung des Erfindungsgegenstandes sind die dem Gehäuse zugewandten Flächen der Querriegel leicht schräg ausgebildet bzw. verzahnt. Die so ausgebildeten Flächen kommen an den Hinterschneidungen des anderen Gestellbauteiles zur Anlage und gewährleisten einen noch sicheren Halt.

Die Erfindung wird nachfolgend anhand von drei Ausführungsbeispielen näher erläutert, die in der Zeichnung dargestellt sind.

Es zeigen:

Fig. 1 in teilweise geschnittener Darstellung eine Seitenansicht eines in einem Zargenprofil eingesetzten Verbindungsschlosses in gelöster Stellung,

Fig. 2 eine Fig. 1 entsprechende Seitenansicht, wobei das Verbindungsschloss gespannt ist und damit eine Verbindung zwischen dem Zargenprofil und einem Stützenprofil herstellt,

Fig. 3 eine Vorderansicht in teilweise geschnittener Darstellung des Verbindungsschlosses in der in Fig. 2 gezeigter Stellung,

Fig. 4 eine Seitenansicht einer zweiten Ausführungsform eines Verbindungsschlosses in einer Schnittdarstellung entsprechend Fig. 2,

Fig. 5 eine Explosionsdarstellung des in Fig. 4 dargestellten Verbindungsschlosses,

Fig. 6 in vergrösserter Darstellung eine Detailansicht des in Fig. 5 gezeigten Verbindungsschlosses,

Fig. 7 eine Seitenansicht einer dritten Ausführungsform eines Verbindungsschlosses in einer den Fig. 2 und 4 entsprechenden Darstellung und

Fig. 8 eine Explosionsdarstellung des in Fig. 7 gezeigten Verbindungsschlosses.

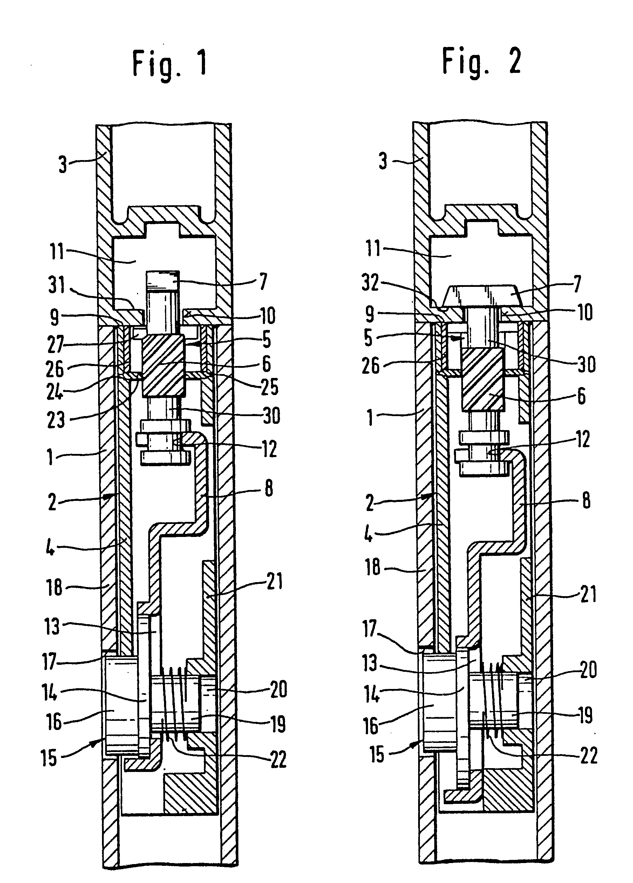

In den Fig. 1 bis 3 ist ein als Hohlprofil ausgebildetes Zargenprofil 1 gezeigt, in dem ein Verbindungsschloss 2 eingesetzt ist, durch das das Zargenprofil 1 mit einem Stützenprofil 3 verbindbar ist. Das Verbindungsschloss 2 besteht aus einem Gehäuse 4 in dem ein Feststellelement 5 längsverschieblich angeordnet ist. Das Feststellelement 5 besteht aus einer Drillstange 6, die an einem Längsende einen Querriegel 7 trägt und an deren anderem End ein Zugelement 8 eingehakt ist.

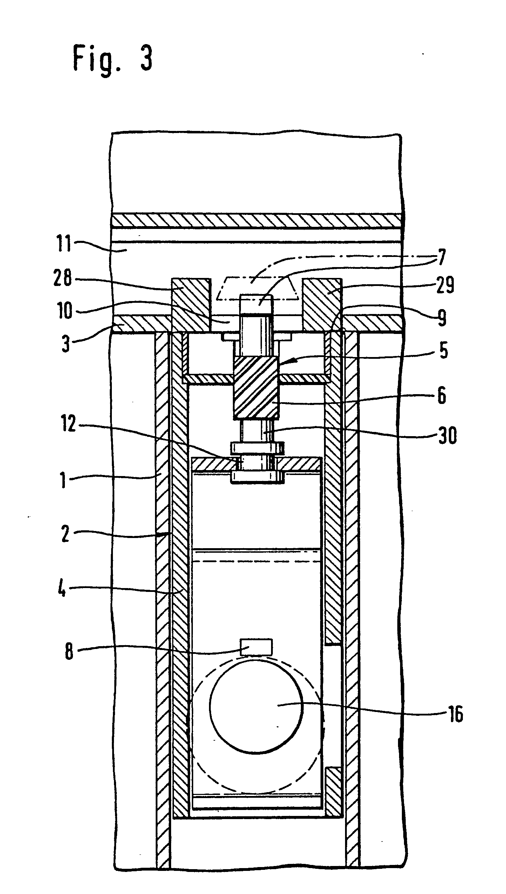

Der aus der Stirnseite 9 des Gehäuses 4 herausragende Querriegel 7 ist in eine Öffnung 10 im Stützenprofil 3 eingeführt und kommt im Verbindungsfall, der in den Fig. 2 und 3 gezeigt ist, in Eingriff mit einer hinterschnittenen Nut 11 des Stützenprofils 3. An dem Zugelement 8 ist eine Aufnahme 12 zum Einhängen des Feststellelementes 5 vorgesehen. An ihrem gegenüberliegenden Ende weist das Zugelement 8 eine Aussparung 13 auf, mit deren Rand die Exzenterscheibe 14 eines Exzenters 15 in Eingriff tritt. Der Exzenterkopf 16 des Exzenters 15 ragt etwa um die Dicke der Wandung des Zargenprofils 1 aus dem Verbindungsschloss 2 heraus, um in eine Bohrung 17 in der Seitenwand 18 des Zargenprofils 1 einzugreifen und das Verbindungsschloss damit in einer unverrückbaren Lage zu halten. Ein Lagerzapfen 19, der sich einstückig an die Exzenterscheibe 14 des Exzenters 15 anschliesst, ist in einer Lageröffnung 20 in der gegenüberliegenden Seitenwand 21 des Verbindungsschlosses 2 geführt. Eine um den Lagerzapfen 19 angeordnete Druckfeder 22 ermöglicht es, den Exzenter 15 durckknopfartig in das Gehäuse einzuschieben, so dass in der Ausgangslage der Exzenterkopf 16 des Exzenters 15 in der Bohrung 17 im Zargenprofil 1 eingerastet ist.

Zur Führung der Drillstange 6 in dem Gehäuse 4 ist ein etwa 0,5 mm starkes Führungsplättchen 23 vorgesehen, das als Blechteil ausgebildet ist und das zwei Führungsstifte 24, 25 an gegenüberliegenden Stellen seiner Umfangsfläche aufweist. Diese Führungsstifte 24 und 25 sorgen dafür, dass das als Drillstangenführung dienende Führungsplättchen 23 ortsfest im Gehäuse 4 angeordnet ist. Die Führungsstifte 24 und 25 sind einstückig mit dem Führungsplättchen 23 ausgebildet. An dem Führungsplättchen 23 kommt eine Anschlagbuchse 26 zur Anlage, die stirnseitig in das Gehäuse 4 eingeschoben ist und zur Begrenzung des Verschiebeweges des Feststellelementes 5 und damit auch der Drehbewegung der Drillstange 6 dient. Mit dieser Anschlagbuchse 26 kommt ein an den Führungsstab 30 des Feststellelementes 5 ausgebildeter Gegenanschlag 27 zur Anlage, der als einfach herzustellende Verquetschung des Führungsstabes 30 ausgebildet ist.

Als Schutz gegen eine Beschädigung des Querriegels 7 sind an dem stirnseitigen Ende 9 des Gehäuses 4 Stege 28 und 29 vorgesehen.

Die Funktionsweise des Verbindungsschlosses 2 bei der Verbindung zweier Gestellbauteile wird nachfolgend beschrieben:

Das Verbindungsschloss 2 wird so weit in ein Zargenprofil 1 eingeschoben, bis der mit einem Innensechskant versehene Exzenterkopf 16 des Exzenters 15 in die vorbereitete Bohrung 17 im Zargenprofil 1 einrastet. In dem in Fig. 1 gezeigten nicht gespannten Zustand liegt der hammerförmige Querriegel 7 parallel zur Breite des Verbindungsschlosses 2, wobei er durch die Stege 28 und 29 vor einer Beschädigung geschützt wird.

Nachdem das Verbindungsschloss 2 in ein Zargenprofil 1 eingesetzt worden ist, wird diese Einheit nun derart an ein Stützenprofil 3 angebracht, indem zunächst der Querriegel 7 durch die Öffnung 10 in das Stützenprofil 1 eingeschoben wird. Danach wird der Exzenter 15 mittels eines geeigneten Schlüssels gedreht. Dadurch wird das Zugelement 8 in das Gehäuse 4 hereingezogen.

Da der Querriegel 7 fest mit der Drillstange 6 verbunden ist, dreht sich der Querriegel 7 bei einer halben Hublänge um 90° (etwa ein Viertel Umdrehung am Exzenter) quer zur hinterschnittenen Nut 11 im Stützenprofil 3 und kommt an den Innenflächen 31 der Hinterschneidungen zur Anlage. Um eine garantierte Lage der Querriegel 7 zu erreichen, sind im bzw. am Gehäuse 4 sowie am Feststellelement 5 selbst Anschläge vorgesehen. In der dargestellten Ausführungsform werden diese Anschläge durch Quetschungen des Führungsstabes 30 gebildet. Das Feststellelement 5 bleibt durch Klemmung des Exzenters 15 in seiner verriegelten Stellung. Durch Lösen des Exzenters kommt auch der Querriegel 7 weider ausser Eingriff mit der Hinterschneidung des Stützenprofiles 3.

Eine verkantungsfreie Verriegelung wird u.a. auch dadurch erreicht, dass der Querriegel doppelköpfig ausgebildet ist. Das aus dem Querriegel 7, dem Führungsstab 30 und der Drillstange 6 bestehende Feststellelement 5 ist in der dargestellten Ausführungsform einstückig ausgebildet. Damit lässt sich einerseits die mögliche Belastbarkeit vergrössern und andererseits wird die Montage des Verbindungsschlosses 2 erleichtert.

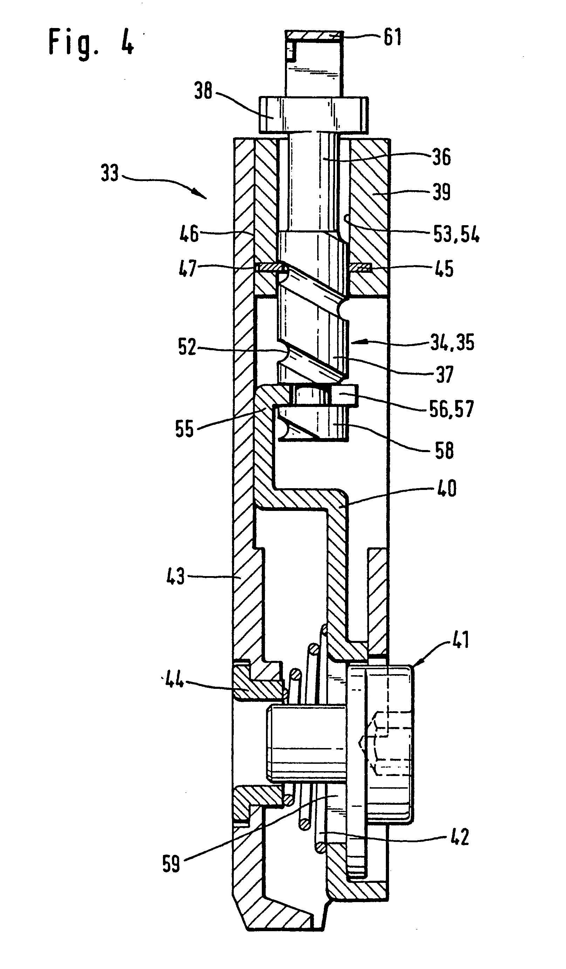

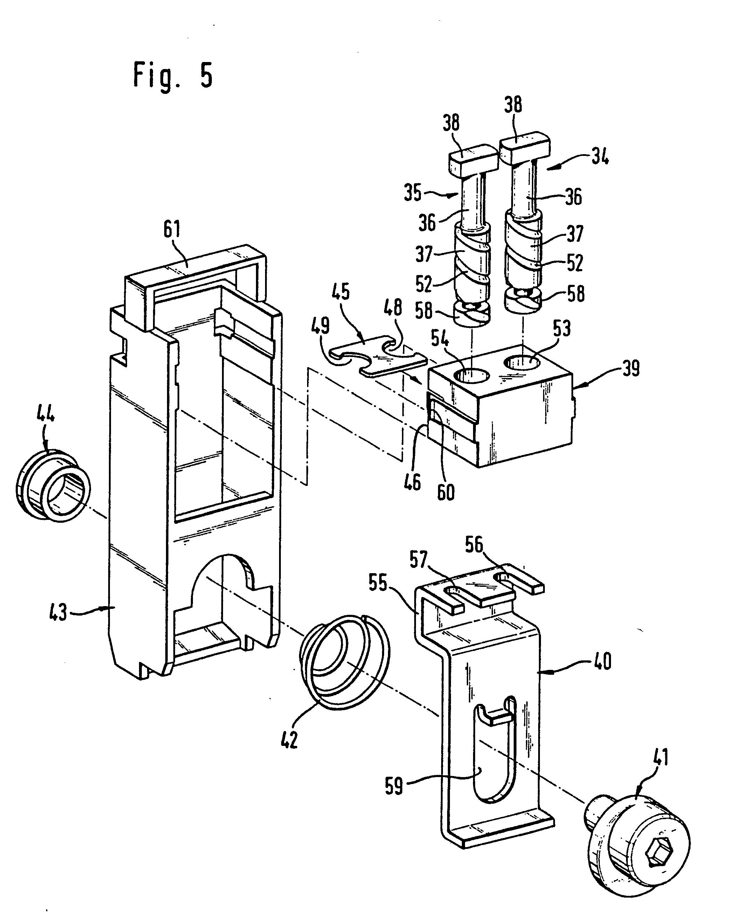

Eine weitere Möglichkeit, die von einem Verbindungsschloss aufnehmbaren Kräfte vergrössern zu können, zeigt das in den Fig. 4 bis 6 gezeigte zweite Ausführungsbeispiel eines Verbindungsschlosses. Dieses Verbindungsschloss 33 besitzt anstelle nur eines Feststellelementes zwei gleichartige Feststellelemente 34 und 35. Jedes dieser Feststellelemente 34, 35 besteht aus einem Führungsstabe 36, einer Drillstange 37 und einem hammerförmigen Querriegel 38. Die Feststellelemente 34 und 35 sind über einen Führungskörper 39 mit einem einzigen Zugelement 40 verbunden, das wiederum mit einem Exzenter 41 verbunden ist.

Der Exzenter 41 entspricht dem Exzenter 15 des Ausführungsbeispiels der Fig. 1 bis 3 und wird auch wie dieser durch eine Druckfeder 42 druckknopfartig in dem Gehäuse 43 gehalten. Zur Lagerung des Exzenters 41 in dem Gehäuse 43 ist eine Lagerbüchse 44 vorgesehen.

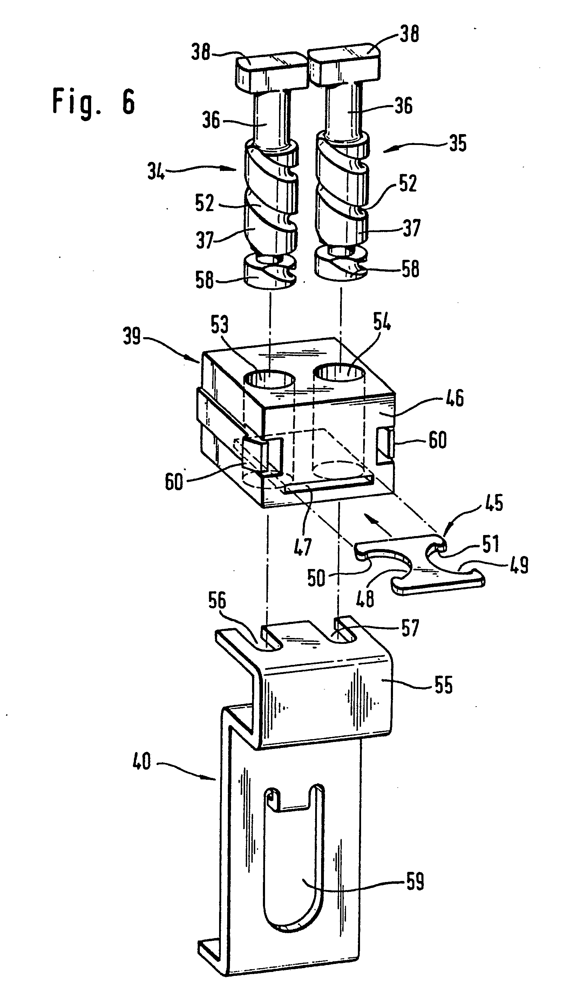

Zur Führung der Feststellelemente 34 und 35 ist in dem in das Gehäuse eingesetzten Führungskörper 39 ein Führungsplättchen 45 eingesetzt. Zur Veranschaulichung dieses Sachverhaltes ist in Fig. 6 dieser Teil des Verbindungsschlosses 33 vergrössert dargestellt. Der Führungskörper 39 weist an einer Seitenwand 46 eine schlitzförmige Ausnehmung 47 zur Aufnahme des Führungsplättchens 45 auf. Das etwa 0,5 mm dicke Führungsplättchen 45 weist an seinen Stirnseiten zwei im wesentlichen halbkreisförmige Ausnehmungen 48 und 49 auf, deren Ränder 50 und 51 in Führungsnuten 52 in den Drillstangen 37 eingreifen und damit eine Führung für die Drillstange 37 liefern.

Als Führung für die Feststellelemente 34, 35 sind in dem Führungskörper 39 zwei senkrecht verlaufende, kreisförmige Durchtrittsöffnungen 53 und 54 vorgesehen. Nachdem die Feststellelemente 34 und 35 in diese Durchtrittsöffnungen 53 und 54 eingesetzt sind, wird das Zugelement 40 mit den Feststellelementen 34, 35 verbunden. Hierzu weist das winkelförmig ausgebildete obere Ende des Zugelementes 40 zwei Ausnehmungen 56 und 57 auf, in die die T-förmigen unteren Enden 58 des Führungsstabes 36 eingehakt werden.

An ihrem anderen Ende weist das Zugelement 40 eine längliche Aussparung 59 auf, durch die die Exzenterscheibe des Exzenters 41 durchtritt.

Nachdem die Feststellelemente 34 und 35 und das Führungsplättchen 45 in den Führungskörper eingesetzt sind, wird dieser so in das Kreuz 43 eingesetzt, dass die Öffnung der schlitzförmigen Ausnehmung 47 zur Innenseite im Gehäuse 43 zu liegen kommt, wodurch das Führungsplättchen 45 an einem Herausfallen gehindert wird. Der Führungskörper 39 selbst wird durch Klipse 60, die an seinen Seitenflächen angeordnet sind und in (nicht dargestellte) Nuten in dem Gehäuse 43 eingreifen in dem Gehäuse gehalten.

Sowohl als Einführungshilfe, als auch als Schutz für die hakenkopfförmigen Querriegel 38 der Feststellelement 34, 35 ist an der Stirnfläche des Gehäuses 43 ein Bügel 61 vorgesehen.

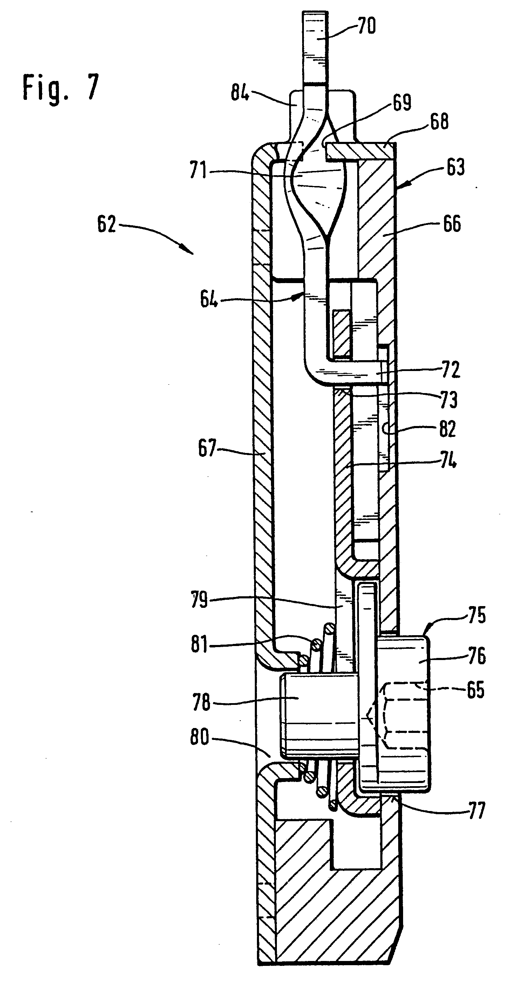

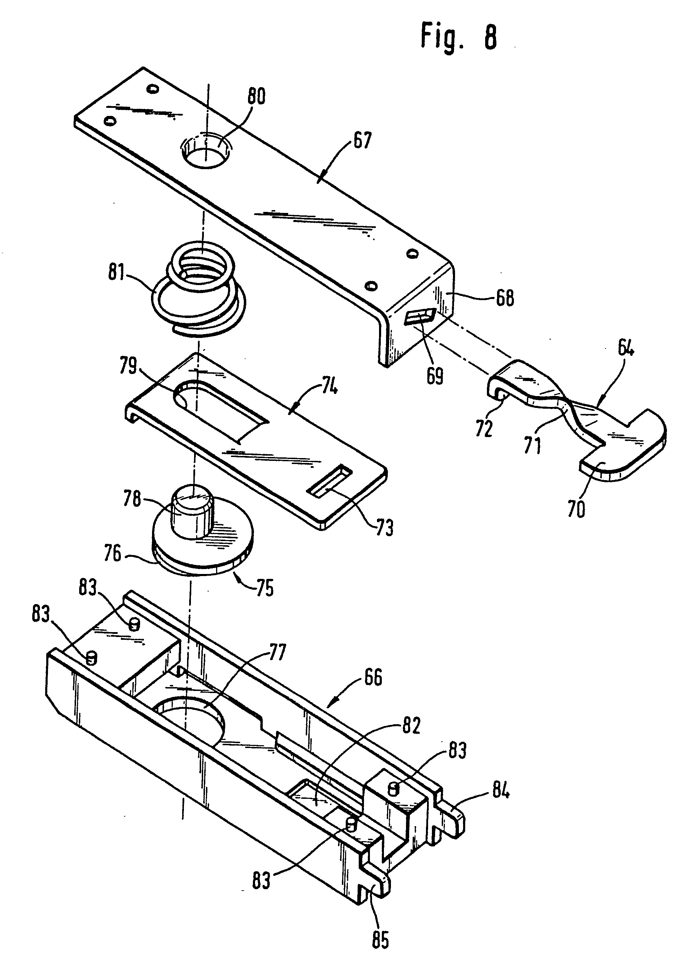

In den Fig. 7 und 8 ist eine besonders einfache und leichte Ausführungsform eines Verbindungsschlosses dargestellt. Dieses Verbindungsschloss 62 besteht aus einem Gehäuse 63, in dem ein Feststellelement 64 längsverschieblich angeordnet ist. Das Gehäuse 62 ist zweiteilig ausgeführt und besteht aus einem Bodenteil 66 und einem Deckel 67. Der Deckel 67 ist an seinem vorderen Ende winkelig ausgeführt, wobei das abgewinkelte Teil 68 die Stirnseite des Gehäuses 63 bildet.

In dem abgewinkelten Teil 68 des Deckels 67 ist ein schräg verlaufender Schlitz 69 ausgebildet, durch den das einstückige Feststellelement 64 reicht. Dieses weist an seinem vorderen Ende einen hammerförmigen Querriegel 70 auf, woran sich ein symmetrisch verdrillter Abschnitt 71 anschliesst. Das andere Ende des Feststellelementes 64 wird durch einen Haken 72 gebildet, der in eine schlitzförmige Ausnehmung 73 in einem schiebefederartigen Zugelement 74 eingehängt wird.

Das Zugelement 74 wird durch einen Exzenter 75 in Längsrichtung des Gehäuses 63 bewegt. Der Exzenterkopf 76 des Exzenters 75 weist eine Werkzeugaufnahme 65 zur Betätigung des Exzenters auf und ragt durch eine Öffnung 77 im Bodenteil 66 des Gehäuses 63. Der dem Exzenterkopf 76 gegenüberliegende Lagerzapfen 78 des Exzenters 75 ragt durch eine längliche Öffnung 79 in dem Zugelement 74 und eine kreisförmige Öffnung 80 in dem Deckel 67. Zwischen dem Zugelement 74 und dem Deckel 67 ist um den Lagerzapfen 78 des Exzenters 75 eine Druckfeder 81 gelegt. Damit ist der Exzenterkopf 76 druckknopfartig in das Gehäuse eindrückbar.

Um eine verkantungsfreie Führung des Feststellelementes 64 in dem Gehäuse 63 zu gewährleisten, ist in dem Bodenteil 66 eine längliche Aussparung 82 für den Haken 72 in dem Bodenteil 66 ausgebildet. Der Deckel 67 kann entweder mit dem Bodenteil 66 verschraubt oder in sonstwie geeigneter Form verbunden sein, insbesondere durch Vernieten. Dieses ist in Fig. 8 durch die Verbindungsstifte 83 veranschaulicht.

Bei dieser besonders einfachen Ausführungsform besteht das Feststellelement 64 aus einem einzigen Bauteil, das die Funktionen des Führungsstabes und der Drillstange in den zuvor beschriebenen Ausführungsformen in sich vereinigt. Bei einer Drehung des Exzenters 75 wird das Feststellelement 64 durch den Schlitz 69 in dem Deckel 67 in das Gehäuse 63 hereingezogen. Sobald der verdrillte Abschnitt 71 in den Bereich des Schlitzes 69 gelangt, wird das Feststellelement 64 gedreht. Die Drehung des hammerförmigen Querriegels 70 bei einer halben Hublänge beträgt dabei etwa 30°. Damit dabei der Haken 72 des Feststellelementes 64 nicht im Bodenteil 66 verkantet, ist dort die Aussparung 82 vorgesehen.

Als Einführhilfe und als Schutz für den hammerkopfförmigen Querriegel 17 sind an dem Bodenteil 66 des Gehäuses 63 nach vorn vorstehende Stege 84 und 85 vorgesehen. Sowohl das Bodenteil 66 als auch der Deckel 67 des Gehäuses 63 können aus Kunststoff hergestellt sein, wodurch das an sich bereits sehr leichte Verbindungsschloss noch leichter wird. Es kann aber auch nur das Bodenteil 66 aus Kunststoff bestehen, während der Deckel 67 aus Blech besteht. Das Feststellelement 64 und das Zugelement 74 bestehen vorteilhafterweise aus gehärtetem Federstahl.

Bezugszeichenliste

| | |
|---|---|
| 1 | Zargenprofil |
| 2 | Verbindungsschloss |
| 3 | Stützenprofil |
| 4 | Gehäuse |
| 5 | Feststellelement |
| 6 | Drillstange |
| 7 | Querriegel |
| 8 | Zugelement |
| 9 | Stirnseite von 4 |
| 10 | Öffnung in 3 |
| 11 | hinterschnittene Nut in 3 |
| 12 | Aufnahme |
| 13 | Aussparung |
| 14 | Exzenterscheibe |
| 15 | Exzenter |
| 16 | Exzenterkopf |
| 17 | Bohrung |
| 18 | Seitenwand |
| 19 | Lagerzapfen |
| 20 | Lageröffnung |
| 21 | Seitenwand von 4 |
| 22 | Druckfeder |
| 23 | Führungsplättchen |
| 24 | Führungsstift |
| 25 | Führungsstift |
| 26 | Anschlagbuchse |
| 27 | Gegenanschlag |
| 28 | Steg |
| 29 | Steg |
| 30 | Führungsstab |
| 31 | Innenfläche |
| 32 | Fläche |
| 33 | Verbindungsschloss |
| 34 | Feststellelement |
| 35 | Feststellelement |
| 36 | Führungsstab |
| 37 | Drillstange |
| 38 | Querriegel |
| 39 | Fürungskörper |
| 40 | Zugelement |
| 41 | Exzenter |
| 42 | Druckfeder |
| 43 | Gehäuse |
| 44 | Lagerbüchse |
| 45 | Führungsplättchen |
| 46 | Seitenwand |
| 47 | schlitzförmige Ausnehmung |
| 48 | Ausnehmung |
| 49 | Ausnehmung |
| 50 | Rand |
| 51 | Rand |
| 52 | Führungsnut |
| 53 | Durchtrittsöffnung |
| 54 | Durchtrittsöffnung |
| 55 | oberes Ende |
| 56 | Ausnehmung |
| 57 | Ausnehmung |
| 58 | T-förmiges Ende |
| 59 | Aussparung |
| 60 | Klipp |
| 61 | Bügel |
| 62 | Verbindungsschloss |
| 63 | Gehäuse |
| 64 | Feststellelement |
| 65 | Werkzeugaufnahme in 76 |
| 66 | Bodenteil |
| 67 | Deckel |
| 68 | abgewinkeltes Teil von 67 |
| 69 | Schlitz |
| 70 | Querriegel |
| 71 | symmetrisch verdrillter Abschnitt |
| 72 | Haken |
| 73 | schlitzförmige Ausnehmung |
| 74 | Zugelement |
| 75 | Exzenter |
| 76 | Exzenterkopf |
| 77 | Öffnung |
| 78 | Lagerzapfen |
| 79 | Öffnung |
| 80 | Öffnung |
| 81 | Druckfeder |
| 82 | Aussparung |
| 83 | Verbindungsstifte |
| 84 | Steg |
| 85 | Steg |

**Patentansprüche**

1. Verbindungsschloss (2, 33, 62) zum lösbaren Verbinden zweier Gestellbauteile (1, 3), insbesondere eines Stützenprofils (3) und eines Zargenprofils (1), wobei das Verbindungsschloss (2, 33, 62) in dem als Hohlprofil ausgebildeten Zargenprofil (1) ortsfest angeordnet ist und in einem Gehäuse (4, 43, 63) mindestens ein Feststellelement (5; 34, 35; 64) aufweist, mit dem das Verbindungsschloss (2, 33, 62) und damit auch das Zargenprofil (1) lösbar mit dem Stützenprofil (3) verbindbar ist, und wobei in dem Gehäuse (4, 43, 63) des Verbindungsschlosses (2, 33, 62) ein Exzenter (15, 41, 75) drehgelagert angeordnet ist, mittels dem das Feststellelement (5; 34, 35; 64) längsbeweglich in dem Gehäuse (4, 43, 63) geführt ist, wodurch ein aus der Stirnseite des Gehäuses (4, 43, 63) herausragendes Bauteil (7, 38, 70) des Feststellelementes (5; 34, 35; 64) in eine hinterschnittene Nut (11) des Stützenprofils (3) einführbar und dort festklemmbar ist, und wobei der Exzenterkopf (16, 76) des in das Gehäuse (4, 43, 63) eindrückbaren Exzenters (15, 41, 75) in eine Bohrung (17) des Zargenprofils (3) einrastbar ist, dadurch gekennzeichnet, dass das aus dem Gehäuse (4, 43, 63) herausragende Bauteil (7, 30; 36, 38; 64, 70) des Feststellelementes (5; 34, 35; 64) gekoppelt an seine Längsbewegung um seine Längsachse in einem begrenzten Winkelbereich verdrehbar ist, dass das Feststellelement (5; 34, 35; 64) über ein Zugelement (8, 40, 74) beweglich mit dem Exzenter (15, 41, 75) verbunden ist und dass das freie Ende des herausragenden Bauteils (30, 36, 64) in einem Querriegel (7, 38, 70) endet.

2. Verbindungsschloss nach Anspruch 1, dadurch gekennzeichnet, dass das gehäuseseitige Ende des herausragenden Bauteils (7, 38) des Feststellelementes (5; 34, 35) fest mit einem um seine Längsachse kontrolliert verdrehbaren Führungsstab (30, 36) verbunden ist, der an seinem anderen Ende mit dem Zugelement (8, 40) verbunden ist.

3. Verbindungsschloss nach Anspruch 1, dadurch gekennzeichnet, dass das Feststellelement (64) in seinem mittleren Bereich eine Verdrillung (71) aufweist, mit der es durch eine schlitzförmige Öffnung (69) in der Stirnseite des Gehäuses (63, 67, 68) reicht.

4. Verbindungsschloss nach einem der Ansprüche 1 bis 3, dadurch gekennzeichnet, dass das Gehäuse des Verbindungsschlosses (2, 33, 62) zweiteilig ausgebildet ist und insbesondere aus einem Bodenteil (66) und einem Deckel (67) besteht.

5. Verbindungsschloss nach Anspruch 3 und 4, dadurch gekennzeichnet, dass der Deckel (67, 68) des zweiteiligen Gehäuses (63) die Gehäusestirnseite überdeckt und den Führungsschlitz (69) für das Feststellelement (64) enthält.

6. Verbindungsschloss nach einem der Ansprüche 1 bis 5, dadurch gekennzeichnet, dass das Feststellelement (5) an seinem dem Querriegel (7, 38, 70) abgewandten Ende mit einer Nut versehen oder abgewinkelt ausgebildet ist, um mit einer Aufnahme (12; 56, 57; 73) in dem Zugelement (8, 40, 74) in Eingriff gebracht zu werden.

7. Verbindungsschloss nach einem der vorhergehenden Ansprüche, dadurch gekennzeichnet, dass zwei oder mehr Feststellelemente (34, 35) in dem Verbindungsschloss (33) vorgesehen und über ein einziges Zugelement (40) mit dem Exzenter (41) verbunden sind.

8. Verbindungsschloss nach einem der vorhergehenden Ansprüche, dadurch gekennzeichnet, dass die Führung des Führungsstabes (30, 36) an dessen Umfangsfläche vorgesehen ist.

9. Verbindungsschloss nach einem der Ansprüche 2 oder 8, dadurch gekennzeichnet, dass zur Führung des Führungsstabes (30, 36) eine Drillstange (6, 37) vorgesehen ist.

10. Verbindungsschloss nach Anspruch 9, dadurch gekennzeichnet, dass die Drillstange (6) ein verdrehtes Vierkant-Blech, ein Vierkant-Stahl, ein Rundstahl mit eingefrästen Führungsnuten oder mit einem Rundgewinde ist.

11. Verbindungsschloss nach einem der Ansprüche 9 oder 10, dadurch gekennzeichnet, dass die Drillstangenführung (23, 45) ortsfest im Gehäuse angeordnet ist.

12. Verbindungsschloss nach Anspruch 11, dadurch gekennzeichnet, dass die Drillstangenführung ein Führungsplättchen (45) ist, das in einen Führungskörper (39) eingesetzt ist, der in dem Gehäuse (43) vorgesehen ist und von einem oder mehreren der Feststellelemente (34, 35) durchsetzt wird.

13. Verbindungsschloss nach Anspruch 12, dadurch gekennzeichnet, dass das Führungsplättchen (45) eine Dicke von weniger als 2 mm, insbesondere von etwa 0,5 mm aufweist.

14. Verbindungsschloss nach Anspruch 12, dadurch gekennzeichnet, dass an den Seitenwänden des Führungskörpers (39) Arretiermittel, insbesondere Klipse (60), ausgebildet sind, die in entsprechende Nuten im Gehäuse (43) eingreifen.

15. Verbindungsschloss nach einem der Ansprüche 2 oder 8 bis 13, dadurch gekennzeichnet, dass im bzw. am Gehäuse (4) mindestens ein Anschlag (26) zur Begrenzung der Drehbewegung des Führungsstabes (30) vorgesehen ist.

16. Verbindungsschloss nach Anspruch 15, dadurch gekennzeichnet, dass als Anschlag eine Anschlagbuchse (26) in dem Gehäuse (4) angeordnet ist, die mit einem Gegenanschlag (27) am Führungsstab (30) zur Anlage kommt.

17. Verbindungsschloss nach einem der vorhergehenden Ansprüche, dadurch gekennzeichnet, dass der Anschlag zur Begrenzung der Drehbewegung des Führungsstabes (30) im Bereich der Aufnahme (12) zum Einhängen des Feststellelementes (5) an dem Zugelement (8) vorgesehen ist und mit einem Gegenanschlag am Führungsstab (30) zur Anlage kommt.

18. Verbindungsschloss nach einem der vorhergehenden Ansprüche, dadurch gekennzeichnet, dass der oder die Querriegel (7, 38, 70) doppelköpfig als Hammerkopf ausgebildet sind.

19. Verbindungsschloss nach einem der vorhergehenden Ansprüche, dadurch gekennzeichnet, dass das herausragende Bauteil (7, 38), der verdrehbare Führungsstab (30, 36) und die Drillstange (6, 37) einstückig ausgebildet sind.

20. Verbindungsschloss nach einem der vorhergehenden Ansprüche, dadurch gekennzeichnet, dass zum Schutz des oder der herausragenden Bauteile (7, 38, 70) an der Stirnseite des Gehäuses (4, 43, 63) Stege (28, 29; 84, 85) oder ein stegförmiger Bügel (61) ausgebildet sind.

21. Verbindungsschloss nach einem der vorhergehenden Ansprüche, dadurch gekennzeichnet, dass der Exzenter (15, 41, 75) das Zugelement (8, 40, 74) an dessen dem Feststellelement (5; 34, 35; 64) abgekehrten Ende durchsetzt, wobei der Exzenterkopf (16, 76) des Exzenters (15, 41, 75) durch eine Druckfeder (22, 42, 81) in seiner in der Bohrung (10) des Zargenprofiles (3) eingerasteten Stellung gehalten wird.

22. Verbindungsschloss nach einem der vorhergehenden Ansprüche, dadurch gekennzeichnet, dass der oder die Querriegel (7, 38) der schweren Ausführungsform mit Führungsstab (30, 36) bei einer halben Hublänge um 90° bzw. der Querriegel (70) der leichten Ausführungsform mit Verdrillung (71) um etwa 30° quer zur hinterschnittenen Nut (11) im Stützenprofil (3) gedreht werden und an den Innenflächen (31) der Hinterschneidungen zur Anlage kommen.

23. Verbindungsschloss nach einem der vorhergehenden Ansprüche, dadurch gekennzeichnet, dass an den dem Gehäuse (4, 43, 63) zugewandten Flächen (32) der Querriegel (7, 38, 70) Rändelungen, Kordelungen oder Verzahnungen ausgebildet sind, oder dass die dem Gehäuse (63) zugewandten Flächen der Querriegel (70) leicht schräg ausgebildet sind.

**Claims**

1. Connecting lock (2, 33, 62) for connecting, in detachable manner, two parts of a stand (1, 3), especially a supporting member (3) and a frame member (1), in which the connecting lock (2, 33, 62) is fixedly arranged in the frame member (1), which is in the form of a hollow section, and has, in a housing (4, 43, 63), at least one fixing member (5; 34, 35; 64) by means of which the connecting lock (2, 33, 62) and thus also the frame member (1) can be connected, in detachable manner, to the supporting member (3), and in which a cam (15, 41, 75) is rotatably mounted in the housing (4, 43, 63) of the connecting lock (2, 33, 62), by means of which cam the fixing member (5; 34, 35; 64) is so guided in the housing (4, 43, 63) that it moves longitudinally, as a result of which a component (7, 38, 70) of the fixing member (5; 34, 35; 64) that projects from the end face of the housing (4, 43, 63) can be introduced into an undercut groove (11) in the supporting member (3) and fixed therein, and in which the cam head (16, 76) of the cam (15, 41, 75), which can be pressed into the housing (4, 43, 63), is able to engage in a bore (17) in the frame member (3), characterised in that the component (7, 30; 36, 38; 64, 70) of the fixing member (5; 34, 35; 64) that projects from the housing (4, 43, 63), in conjunction with its longitudinal movement, is pivotable about its longitudinal axis in a limited angular region, the fixing member (5; 34, 35; 64) is movably connected to the cam (15, 41, 75) by way of a pulling member (8, 40, 74), and the free end of the projecting component (30, 36, 64) terminates in a transverse bar (7, 38, 70).

2. Connecting lock according to claim 1, characterised in that the end of the projecting component (7, 38) of the fixing member (5; 34, 35) that is closest to the housing is firmly connected to a guide rod (30, 36) which is pivotable, in controlled manner, about its longitudinal axis and is connected at its other end to the pulling member (8, 40).

3. Connecting lock according to claim 1, characterised in that the fixing member (64) has in its middle region a twisted portion (71) by means of which it extends through a slot-like opening (69) in the end face of the housing (63, 67, 68).

4. Connecting lock according to any one of claims 1 to 3, characterised in that the housing of the connecting lock (2, 33, 62) is in two parts and comprises, especially, a base portion (66) and a cover (67).

5. Connecting lock according to claims 3 and 4, characterised in that the cover (67, 68) of the two-part housing (63) covers the end face of the housing and contains the guide slot (69) for the fixing member (64).

6. Connecting lock according to any one of claims 1 to 5, characterised in that the end of the fixing member (5) that is remote from the transverse bar (7, 38, 70) is provided with a groove or is angled, in order to engage with a seat (12; 56, 57; 73) in the pulling member (8, 40, 74).

7. Connecting lock according to any one of the preceding claims, characterised in that two or more fixing members (34, 35) are provided in the connecting lock (33) and are connected to the cam (41) by way of a single pulling member (40).

8. Connecting lock according to any one of the preceding claims, characterised in that the guide means for the guide rod (30, 36) is provided on its peripheral surface.

9. Connecting lock according to claim 2 or 8, characterised in that a drill-like rod (6, 37) is provided for guiding the guide rod (30, 36).

10. Connecting lock according to claim 9, characterised in that the drill-like rod (6) is a twisted square metal plate, a square steel bar or a round steel bar into which guide grooves have been cut or which has a round thread.

11. Connecting lock according to claim 9 or 10, characterised in that the guide means (23, 45) for the drill-like rod is fixedly arranged in the housing.

12. Connecting lock according to claim 11, characterised in that the guide means for the drill-like rod is a guide plate (45) inserted in a guide body (39) which is provided in the housing (43) and through which pass one or more of the fixing members (34, 35).

13. Connecting lock according to claim 12, characterised in that the guide plate (45) has a thickness of less than 2 mm, especially of approximately 0.5 mm.

14. Connecting lock according to claim 12, characterised in that locking means, especially spring clips (60), are formed on the lateral walls of the guide body (39) and engage in corresponding grooves in the housing (43).

15. Connecting lock according to any one of claims 2 or 8 to 13, characterised in that at least one stop (26) is provided in, or on, the housing (4) for limiting the rotary movement of the guide rod (30).

16. Connecting lock according to claim 15, characterised in that, as the stop, there is arranged in the housing (4) a stop sleeve (26), which comes to rest against a counter-stop (27) on the guide rod (30).

17. Connecting lock according to any one of the preceding claims, characterised in that the stop for limiting the rotary movement of the guide rod (30) is provided in the region of the seat (12) for hooking the fixing member (5) on the pulling member (8) and comes to rest against a counter-stop on the guide rod (30).

18. Connecting lock according to any one of the preceding claims, characterised in that the transverse bar(s) (7, 38, 70) is/are double-headed in the form of a hammer head.

19. Connecting lock according to any one of the preceding claims, characterised in that the projecting component (7, 38), the pivotable guide rod (30, 36) and the drill-like rod (6, 37) are constructed in one piece.

20. Connecting lock according to any one of the preceding claims, characterised in that, in order to protect the projecting component(s) (7, 38, 70), webs (28, 29; 84, 85) or a web-like bracket (61) is/are formed on the end face of the housing (4, 43, 63).

21. Connecting lock according to any one of the preceding claims, characterised in that the cam (15, 41, 75) extends through the pulling member (8, 40, 74) at its end that is remote from the fixing member (5; 34, 35; 64), the cam head (16, 76) of the cam (15, 41, 75) being held by means of a compression spring (22, 42, 81) in the position in which it is engaged in the bore (10) in the frame member (3).

22. Connecting lock according to any one of the preceding claims, characterised in that, on execution of a half stroke, the transverse bar(s) (7, 38) in the heavy embodiment having a guide rod (30, 36) are pivoted through 90°, and the transverse bar (70) in the light-weight embodiment having a twisted portion (71) is pivoted through approximately 30°, transversely to the undercut groove (11) in the supporting member (3) and come(s) to rest against the inner faces (31) of the undercuts.

23. Connecting lock according to any one of the preceding claims, characterised in that the faces (32) of the transverse bars (7, 38, 70) that face the housing (4, 43, 63) are provided with straight knurls or diagonal knurls or are toothed, or the faces of the transverse bars (70) that face the housing (63) are inclined slightly.

**Revendications**

1. Serrure d'assemblage (2, 33, 62) pour l'assemblage amovible de deux éléments de construction d'ossatures (1, 3), notamment un profilé de soutien (3) et un profilé de châssis (1), la serrure d'assemblage (2, 33, 62) étant placée de manière fixe dans le profilé de châssis (1) ayant la forme d'un profilé creux et présentant, dans un boîtier (4, 43, 63) au moins un élément de fixation (5; 34, 35; 64) permettant d'assembler de manière amovible la serrure d'assemblage (2, 33, 62) et par conséquent aussi le profilé de châssis (1), au profilé de soutien (3), et un excentrique (15, 41, 75) étant monté en rotation dans le boîtier (4, 43, 63) de la serrure d'assemblage (2, 33, 62), au moyen duquel l'élément de fixation (5; 34, 35; 64) est guidé coulissant longitudinalement dans le boîtier (4, 43, 63), ce qui permet à un élément constitutif (7, 38, 70) de l'élément de fixation (5; 34, 35; 64), faisant saillie de la face frontale du boîtier (4, 43, 63), de pénétrer dans une rainure (11) détalonnée du profilé de soutien (3) et d'y être fixé, et la tête d'excentrique (16, 76) de l'excentrique (15, 41, 75) pressée dans le boîtier (4, 43, 63) pouvant s'encliqueter dans un perçage (17) du profilé de châssis (3), caractérisée en ce que l'élément constitutif (7, 30; 36, 38; 64, 70) de l'élément de fixation (5; 34, 35; 64), faisant saillie du boîtier (4, 43, 63), peut tourner, couplé à son déplacement longitudinal, autour de son axe longitudinal sous un angle limité, en ce que l'élément de fixation (5; 34, 35; 64) est assemblé de façon mobile à l'excentrique (15, 41, 75), par un élément de traction (8, 40, 74) et en ce que l'extrémité libre de l'élément constitutif (30, 36, 64) saillant aboutit à une traverse (7, 38, 70).

2. Serrure d'assemblage selon la revendication 1, caractérisée en ce que l'extrémité côté boîtier de l'élément constitutif (7, 38) saillant de l'élément de fixation (5; 34, 35) est assemblée de manière rigide à une barre de guidage (30, 36) pouvant tourner de façon contrôlée autour de son axe longitudinal, la barre de guidage (30, 36) étant assemblée à son autre extrémité à l'élément de traction (8, 40).

3. Serrure d'assemblage selon la revendication 1, caractérisée en ce que l'élément de fixation (64) présente une torsade (71) dans sa zone médiane par laquelle il pénètre à travers une ouverture (69) en forme de fente pratiquée dans la face frontale du boîtier (63, 67, 68).

4. Serrure d'assemblage selon l'une des revendications 1 à 3, caractérisée en ce que le boîtier de la serrure d'assemblage (2, 33, 62) est en deux parties et constitué notamment d'un élément de fond (66) et d'un couvercle (67).

5. Serrure d'assemblage selon les revendications 3 et 4, caractérisée en ce que le couvercle (67, 68) du boîtier (63) en deux parties recouvre la face frontale du boîtier et contient la fente de guidage (69) de l'élément de fixation (64).

6. Serrure d'assemblage selon l'une des revendications 1 à 5, caractérisée en ce que l'élément de fixation (5) est pourvu d'une rainure ou est coudé à son extrémité éloignée de la traverse (7, 38, 70) afin de pouvoir pénétrer dans un logement (12; 56, 57; 73) de l'élément de traction (8, 40, 74).

7. Serrure d'assemblage selon l'une des revendications 1 à 6, caractérisée en ce que deux éléments de fixation (34, 35) ou plus sont prévus dans la serrure d'assemblage (33) et assemblés à l'excentrique (41) par un seul élément de traction (40).

8. Serrure d'assemblage selon l'une des revendications 1 à 7, caractérisée en ce que le guidage de la barre de guidage (30, 36) est prévu sur sa surface périphérique.

9. Serrure d'assemblage selon l'une des revendications 2 ou 8, caractérisée en ce qu'il est prévu une tige de torsion (6, 37) pour le guidage de la barre de guidage (30, 36).

10. Serrure d'assemblage selon la revendication 9, caractérisée en ce que la tige de torsion (6) est une tôle carrée, un acier carré, un rond d'acier présentant des rainures de guidage obtenues par fraisage ou un filetage rond.

11. Serrure d'assemblage selon l'une des revendications 9 ou 10, caractérisée en ce que le guidage de la tige de torsion (23, 45) est placé de façon fixe dans le boîtier.

12. Serrure d'assemblage selon la revendication 11, caractérisée en ce que le guidage de la tige de torsion est constitué par une plaquette de guidage (45), placée dans un corps de guidage (39) qui est prévu dans le boîtier et qui est traversé par un ou plusieurs des éléments de fixation (34, 35).

13. Serrure d'assemblage selon la revendication 12, caractérisée en ce que la plaquette de guidage (45) a une épaisseur inférieure à 2 mm, notamment de 0,56 mm environ.

14. Serrure d'assemblage selon la revendication 12, caractérisée en ce que des moyens de blocage, notamment des circlips (60), sont formés sur les parois latérales du corps de guidage (39), et qui pénètrent dans des rainures correspondantes du boîtier (43).

15. Serrure d'assemblage selon l'une des revendications 2 ou 8 à 13, caractérisée en ce qu'une butée (26) au moins est prévue dans ou sur le boîtier (4) pour limiter la rotation de la barre de guidage (30).

16. Serrure d'assemblage selon la revendication 15, caractérisée en ce qu'il est prévu comme butée dans le boîtier (4), une douille de butée (26) qui vient en butée contre une contre-butée (27) de la barre de guidage (30).

17. Serrure d'assemblage selon l'une des revendications 1 à 16, caractérisée en ce que la butée servant à limiter la rotation de la barre de guidage (30) est prévue dans la zone du logement (12) destiné à accrocher l'élément de fixation (5) à l'élément de traction (8), et vient en butée contre une contre-butée de la barre de guidage (30).

18. Serrure d'assemblage selon l'une des revendications 1 à 17, caractérisée en ce que la ou les traverse(s) (7, 38, 70) ont deux têtes servant de têtes de marteau.

19. Serrure d'assemblage selon l'une des revendications 1 à 18, caractérisée en ce que l'élément constitutif (17, 38) saillant, la barre de guidage (30, 36) tournante et la tige de torsion (6, 37) sont formées d'une seule pièce.

20. Serrure d'assemblage selon l'une des revendications 1 à 19, caractérisée en ce qu'il est formé des pattes (28, 29; 84, 85) ou un étrier formant entretoise (61), sur la face frontale du boîtier (4, 43, 63) pour protéger le ou les élément(s) constitutif(s) (7, 38, 70) saillants.

21. Serrure d'assemblage selon l'une des revendications 1 à 20, caractérisée en ce que l'excentrique (15, 41, 75) traverse l'élément de traction (8, 40, 74) à son extrémité éloignée de l'élément de fixation (5; 34, 35; 64), la tête d'excentrique (16, 76) de l'excentrique (15, 41, 75) étant maintenue par un ressort de pression (22, 42, 81) dans sa position encliquetée dans le perçage (10) du profilé de châssis (3).

22. Serrure d'assemblage selon l'une des revendications 1 à 21, caractérisée en ce que la ou les traverse(s) (7, 38) de la tour d'exécution la plus lourde avec barre de guidage (30, 36) peut tourner pour une demi-longueur de course, de 90°, et la traverse (70) de la tour d'exécution la plus légère avec torsade (71), d'environ 30° perpendiculairement à la rainure (11) détalonnée, dans le profilé de soutien (3) et venir en butée contre les faces intérieures (31) des détalonnages.

23. Serrure d'assemblage selon l'une des revendications 1 à 22, caractérisée en ce que des moletages, des moletages en X ou des dentures sont formés sur les faces (32) des traverses (7, 38, 70) tournées vers le boîtier (4, 43, 63), ou en ce que les faces des traverses (70), tournées vers le boîtier (63), sont légèrement obliques.

# Fig. 1

# Fig. 2

# Fig. 3

# Fig. 4

Fig. 5

Fig. 6

Fig. 7

# Fig. 8